# EUROPEAN PATENT SPECIFICATION

(11) **EP 2 503 430 B1**
(45) Date of publication and mention of the grant of the patent: **23.05.2018**
(21) Application number: 11158792.9
(22) Date of filing: 18.03.2011
(51) Int. Cl.: G06F 1/32

(54) **System resource management in an electronic device**
Systemressourcenmanagement in einer elektronischen Vorrichtung
Gestion de ressources de système dans un dispositif électronique

(43) Date of publication of application: 26.09.2012
(73) Proprietor: 2236008 Ontario Inc., Waterloo, ON N2K 0A7 (CA)
(72) Inventor: Danko, Attilla, Ottawa Ontario K2M 1W8 (CA); Stecher, Brian John, Ottawa Ontario K2M 1W8 (CA)
(74) Representative: Hanna Moore + Curley

(56) References cited:
- EP-A1- 0 990 977
- WO-A2-2006/088167
- US-A- 5 919 264
- US-A1- 2004 123 172

## Description

### TECHNICAL FIELD

The following description relates to electronic devices, and in particular to managing resources of the electronic device in relation to performance and power management.

### BACKGROUND

Electronic devices are composed of a plurality of cooperating components. The individual components may have one or more operating characteristics that can be varied to change the performance or operation of the component as well as the overall electronic device. For example, a portable computing device may include a processor, a display screen and a network adapter. The processor may be operated using different clock frequencies and voltages, the brightness of the display screen may be adjusted higher or lower, and the latency of the network adapter may be increased or decreased. Adjusting operating characteristics of the individual components has associated tradeoffs, typically the higher the performance the greater the energy consumption, which may be undesirable for portable devices.

The components of electronic devices have become more complex and intelligent. Individual components, or groups of components may self manage the operating characteristics of the components in order to reduce the total power consumption of the electronic device or meet other desired characteristics. For example, a processor may employ active power consumption management techniques including dynamic voltage and frequency scaling (DVFS), adaptive voltage scaling (AVS) and/or dynamic voltage switching (DVS), which change the operating characteristics of the processor.

While components that may self manage their power consumption can improve the overall power consumption of the electronic device, there is little ability for the overall electronic device to manage the performance of components that have their operating characteristics managed by other components, including self-managed components as well as more traditional components, in order to meet performance or other requirements in a power efficient manner.

Further complicating power consumption and performance management is the fact that different electronic devices have different specific hardware components and as such different operating characteristics, making it difficult or time consuming to provide advanced power management since knowledge of the actual components is necessary in order to optimize the performance and power consumption of electronic devices. Therefore there is a need for an improved system and method of managing resources in an electronic device.

EP 0 990 977 A1 relates to a power control apparatus (PCA) for controlling the power consumption of each of resources for running an application program in an electrical apparatus for running the application program, an operation status detector detects operation statuses of the application program. A load determinator determines a load on the resource in the detected operation status of the application program. A resource operation controller controls the operation of each of the resources such that the resource is operated by a load determined by the load determinator. As a result, the resource is driven by power properly required to run the application program depending on the operation status of the application program.

### SUMMARY

In one aspect, the present disclosure provides a method of managing resources of an electronic device. The method comprises the steps recited in claim 1.

In another aspect, the present disclosure provides an electronic device for managing performance of resources of the electronic device, the electronic device as recited in claim 8.

Other aspects of the present disclosure will be apparent to those of ordinary skill in the art from a review of the following detailed description in conjunction with the drawings. Embodiments of the present disclosure are not limited to any particular operating system, computing device architecture, mobile device architecture, server architecture, or computer programming language.

### BRIEF DESCRIPTION OF THE DRAWINGS

Embodiments are described herein with reference to the appended drawings, in which:
Figure 1 depicts in a block diagram components of an electronic device in which a policy manager as described further herein may be used;
Figure 2 depicts in a block diagram components of an electronic device that can manage the performance of components of the electronic device;
Figure 3 depicts in a block diagram components of a policy manager;
Figure 4 depicts in a block diagram components of a further policy manager;
Figure 5 depicts in a flow chart a method of managing resources on an electronic device;
Figure 6 depicts in a flow chart a further method of managing resources on an electronic device;
Figure 7 depicts an illustrative dependency requirement for a browser;
Figure 8 depicts an illustrative dependency requirement for an audio player;
Figure 9 depicts an illustrative dependency requirement for a game;
Figure 10 depicts an illustrative dependency requirement for a screen blanking application;
Figure 11A depicts illustrative authority information associated with the applications of Figures 6 - 10; and
Figure 11B depicts illustrative partial authority information associated with the applications of Figures 6 - 10.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

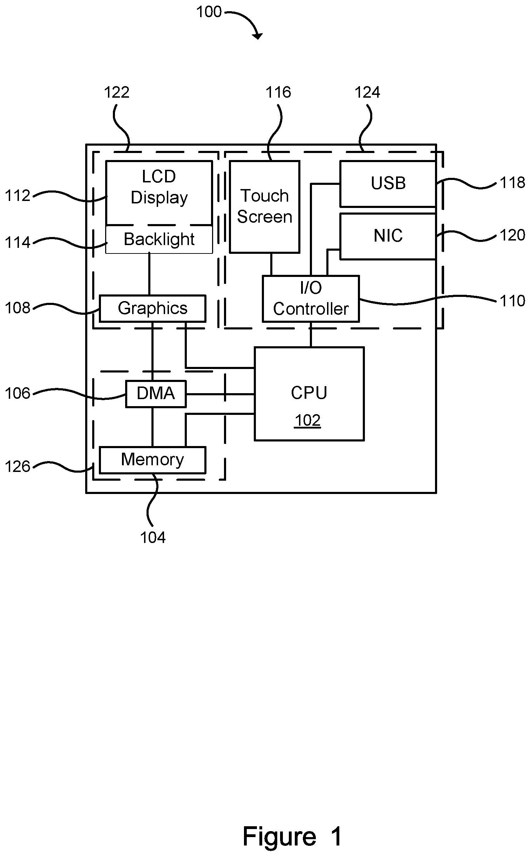

Figure 1 depicts in a block diagram hardware components of an electronic device in which a policy manager as described further herein may be used. The electronic device **100** is considered herein as a portable electronic device such as a smart-phone or tablet device having a touch screen. It is also contemplated that the electronic device may be other types of electronic devices including, for example, laptop computers, personal computers, set-top boxes, personal entertainment devices, navigation devices, vehicle control systems, network devices or other electronic devices that may benefit from managing component performance.

The electronic devices **100** comprise various cooperating hardware components that must interact during the operation of the electronic device. A central processing unit (CPU) **102** executes instructions to control the overall operation of the electronic device **100.** The CPU **102** may be connected directly or indirectly to a plurality of hardware components, including memory **104** or storage unit, a direct memory access (DMA) controller **106,** a graphics processor **108,** and an input/output (I/O) controller **110.** As depicted, other hardware components may be connected to CPU (**102**) through other components. For example, a display, which may comprise an LCD display **112** and associated backlight **114** may be connected to the CPU through the graphics processor **108.** Similarly, a touch screen component **116,** a universal serial bus (USB) port or controller **118,** or local wired data connection interface, and a wired or wireless network interface component (NIC) **120** may be connected to the CPU **102** through one or more controllers, represented by I/O controller **110.** Each of the hardware components may have one or more operating characteristics that can be adjusted in order to control the performance of the hardware component.

The hardware components and connections depicted in Figure 1 are illustrative and not all required components are depicted. For example, a battery is not shown, however would be required for a portable device. Similarly, not all components depicted may be required based upon the particular electronic device.

In order to conserve power it may be possible to turn off, or otherwise change operating characteristics of, individual hardware components. For example, often the backlight of the display will be powered down or its brightness reduced if no user input has been received for a specified period of time, for example one minute. Power consumption may be further reduced by powering down groups of hardware components or sections of the electronic device **100.** For example, three power domains are depicted by broken boxes **122, 124** and **126.** If there are no graphics to be displayed the entire graphics power domain **122,** which comprises the graphics controller **108,** LCD display **112** and backlight **114,** may be powered down or turned off. Similarly, if the I/O components are not required an I/O power domain **124** comprising the I/O controller **110,** the touch screen **116,** the USB **118** and the NIC **120,** can be powered down. A memory power domain **126** is also depicted as comprising the DMA controller **106** and the memory **104.** If there is no memory access it may be possible to power down the memory power domain **126.**

Powering down hardware components and power domains can improve power consumption, however it requires specific knowledge of the hardware components implemented in the electronic device and the hardware components in the different power domain. Furthermore, when powering up a power domain and its hardware components, it may be desirable to power on the hardware components in a specific order. For example, it may be desirable to power on the graphics controller **108,** followed by the LCD display **112** and finally the backlight **114.**

In addition to powering down hardware components and power domains, power consumption may be reduced by reducing performance of the components by adjusting one or more operating characteristics. For example, the brightness of the backlight may be lowered to reduce the power consumed. As a further example, the graphics controller **108** may be able to provide both 2-dimensional (2D) and 3-dimensional (3D) processing modes. The 2D processing mode may consume less power, but does not provide the performance of the 3D mode which may be required for processing 3D data. By reducing the performance of hardware components, the power consumption of the electronic device is generally also reduced.

The operating characteristics of hardware components of the electronic device **100** may be controlled in various ways depending on the capabilities of the hardware components. For example, some hardware components may allow values for specific operating characteristics to be set by an external component. These hardware components may be referred to as externally-managed components, since the actual operating characteristics of the hardware component may be controlled by external components.

Hardware components of the electronic device **100** may be able to manage their own operating characteristics. Such devices may be referred to as self-managed components. Self-managed components can determine for themselves values for one or more operating characteristics. For example, the processor may be able to change one or more operating characteristics, such as the voltage or clock frequency, depending on the current processing requirements and operating conditions. Self-managed components may change the values of operating characteristics on a millisecond or nanosecond time scale, making it difficult for external control of the operating characteristics. It is possible to provide information to self-managed components that can be used when determining the values for the different operating characteristics. For example, the information may provide a desired level of response or performance, and the self-managed component can use this information, along with additional information available to it, in order to determine for itself the values for its operating characteristics.

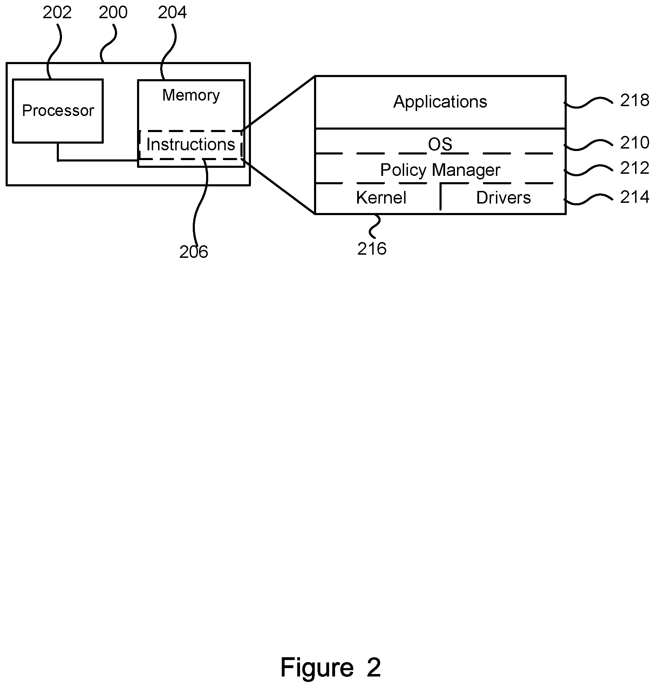

Figure 2 depicts in a block diagram components of an electronic device **200** that can be used to manage resources of the electronic device. The resources managed may comprise both hardware and software components, including both externally-managed components and self-managed components, of the electronic device. It is noted that not all of the components of the electronic device **200** are depicted for simplicity. The electronic device **200** comprises a processor **202** for executing instructions and a memory **204** for storing instructions **206.** The instructions **206,** when executed by the processor **202,** configure the electronic device **200** to provide various functionality. The functionality may include an operating system (OS) **210** and applications **218** that interact with the OS **210.** The OS **210** may comprise a policy manager **212** that manages the resources of the electronic device **200.** The OS **210** may also comprise a kernel **216** that comprises core functionality of the OS **210,** such as a scheduler for scheduling the execution of processes or threads. The OS **210** may also comprise one or more drivers **214** which allow hardware components of the electronic device to operate with, and be controlled by software components such as, the OS **210,** and applications **218.** Although depicted as part of the OS **210,** the policy manager **212** and the one or more drivers **214** may be implemented separately from the OS **210.**

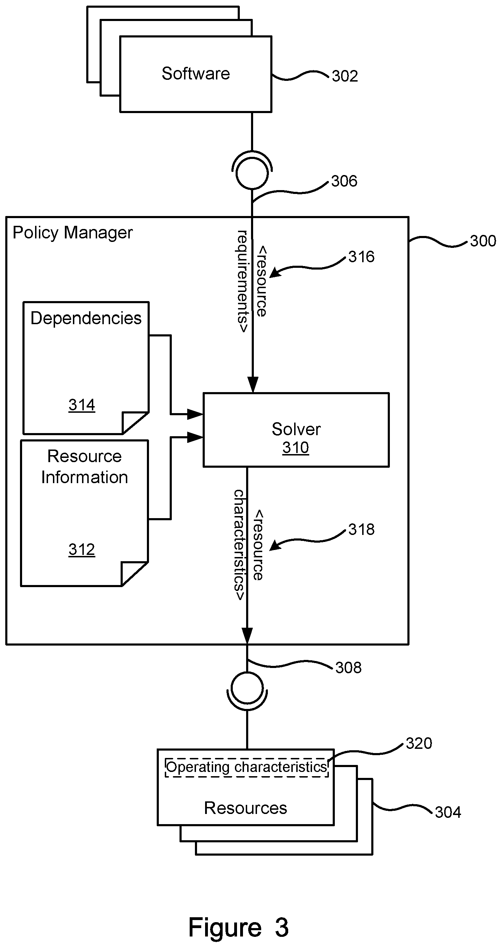

Figure 3 depicts in a block diagram components of a policy manager. The policy manager **300** allows one or more software components **302** to provide resource requirements **316** during operation. Although described herein as software components **302** for clarity, the policy manager **300** may receive resource requirements **316** from various resource requesters that may include the software components **302** and/or other resources of the electronic device including hardware components capable of communicating with the policy manager **300.** The policy manager **300** receives resource requirements **316** and determines values for resource characteristics of the resources **304** that will satisfy the received resource requirements **316.** The resources **304** can control one or more operating characteristics **320** using the received resource characteristics **318.** The one or more software components **302** may comprise applications, portions of applications, the OS **210** or portions of the OS **210** including drivers **214** for components of the electronic device.

The policy manager **300** comprises an interface **306** for receiving one or more resource requirements **316** from software **302.** The policy manager **300** also comprises an interface **308** for providing resource characteristics **318** to resources of the electronic device **304** as determined by the policy manager **300.** Drivers **214** of the electronic device may implement the interface **308** in order to allow the component associated with the driver **214** to communicate with the policy manager **300.** Although the resources **304** are depicted separately from the software components **302,** it is contemplated that a software component **302** that can provide resource requirements **316** may also be a resource **304** capable of receiving resource characteristics **318** determined and provided by the policy manager **300.** The policy manager **300** comprises a solver **310** that receives the resource requirements **316** from the software **302** and determines the resource characteristics **318** to provide to associated resources **304** in order to satisfy the received resource requirements **316.**

The policy manager **300** includes information on the resources **312** and their resource characteristics that can be controlled. The resource characteristics may specify a value for an operating characteristic of an associated resource. For example, a graphics component may have a resource characteristic that specifies the operating characteristic mode as either 2D or 3D. Similarly, a NIC may have a resource characteristic specifying the possible bandwidth, and a resource characteristic specifying the possible latency. The resource characteristic may also specify information that can be used by a self-managed component in order to determine appropriate operating characteristics itself. For example, a resource characteristic for a processor may indicate that the processor should provide its highest performance. The processor may then control its operating characteristics as required to provide the resource characteristic. The resource information **312** may specify a plurality of predicates that each define a resource characteristic and allowable values. The allowable values may be a range of values or specific values. Furthermore, the resource information **312** may specify a hierarchy of the allowable values, expressing which values encompass other values. For example, in the case of a NIC, a lower value for latency will encompass a higher value, since the lower latency will satisfy the requested minimum performance. Not all values of resource characteristics may encompass other values. For example, if a resource may be on or off, the two values are mutually exclusive, and neither encompasses the other.

The policy manager **300** also comprises information on dependencies **314** between various resource characteristic values. The dependency information **314** specifies a hierarchical dependency between resource characteristic values. Each dependency may specify one or more resource characteristic values that must be provided in order for a target resource requirement **316** to be provided. For example, if a display **112** is required to be on, it will also require display information that is provided by a graphics component **108.** As a result, a dependency could specify that if the display **112** is on, the graphics component **108** also needs to be on. The dependency information **314** may be represented as a directed graph. The directed graph of the dependency information should not have any circular dependencies, that is, a resource characteristic value should not require setting a value for the same resource characteristic. As such, the dependency information **314** provides a hierarchical dependency between resource characteristic values. The acyclic nature of the dependency information may be enforced externally to the policy manager, for example when creating the dependency information if it is static. Additionally or alternatively, the policy manager **300** may provide functionality for enforcing the acyclic nature of the dependency information **314** and for allowing the dependency information **314** to be dynamic (e.g. changing from time-to-time).

The solver **310** receives the resource requirements **316** from software **302** through the interface **306.** The solver **310** uses the dependency information **314** to determine the required values for resource characteristics of one or more resources **304** in order to satisfy the resource requirements **316.** The solver **310** may determine the required values by treating the resource requirement **316** request as a logical predicate that needs to be true. The solver **310** may then use the dependency information **314** to determine one or more resource characteristic values that also need to be true in order to make the original predicate true. Once all of the resource characteristics values of the one or more resources **304** are determined from the dependency information **314,** they are provided to the associated resources **304** which use the provided resources characteristics to determine operating characteristics of the resources **304.** Any resource characteristics whose values have not been explicitly set, may be set to their lowest value, that is the value that makes the least demand on the associated resource **304.** Alternatively, a resource **304** may determine the values of operating characteristics if resource characteristics are not explicitly provided. The resource **304** may, for example use default values for the operating characteristics.

Placing the lowest performance demand on a resource **304** may also inherently be associated with the lowest power consumption; however if this is not the case, the resource information **312** may also include power consumption information associated with each resource characteristic value in order to allow the solver **310** to determine the values for resource characteristics for the resources **304** of the electronic device **100** that will provide the lowest power consumption while still satisfying the received resource requirements **316.**

The received resource requirement **316** requests may specify a resource characteristic value explicitly or implicitly. For example, a resource requirement **316** may specify that the graphics component **108** be turned on. Alternatively, the resource requirement **316** may specify a resource characteristic value implicitly. For example, the resource requirement **316** may specify an operating state of a software component **302.** The dependency information **314** may in turn specify the resource characteristic values required when the software component **302** is operating in the state indicated by the received resource requirement **316.** For example, a web browser may require a display screen to be on when the user is interacting with the browser. A received resource requirement **316** may indicate to the policy manager **300** that the browser is currently operating in a mode that allows user interaction and the dependency information **314** may be used to determine that, for example the display **112** needs to be on.

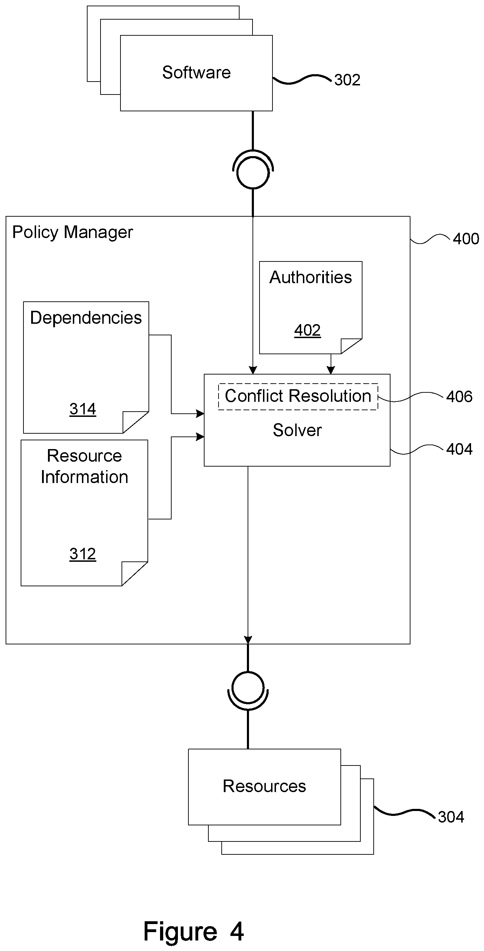

Figure 4 depicts in a block diagram components of a further example policy manager. The policy manager **400** is similar to the policy manager **300;** however, it includes authority information **402.** The authority information **402** provides a relative ranking of software components **302** or resource requesters that can provide resource requirement **316** requests to the policy manager **400.** The authority information **402** allows the solver **404,** or more particularly a conflict resolution component **406** of the solver **404,** to resolve conflicts between resource characteristic values required to satisfy received resource requirements **316.** For example, one software component **302** may provide a resource requirement **316** that indicates the display should be turned on while another software component **302** may provide a resource requirement **316** that indicates the display should be turned off. Both of these resource requirements **316** cannot be met concurrently. In order to satisfy both resource requirements **316** the conflict resolution component **406** uses the authority information **402** to determine which resource requirement **316,** or resource characteristic value, should be met

The authority information **402** may specify the authorities in various ways. For example, the authority information **402** may specify a plurality of relative authorities between resource requesters. The plurality of relative authorities can be assembled into a hierarchical tree structure that can be used when resolving conflicts. A resource requester may be associated with one of the authorities in the hierarchical tree structure. As a result, the resource requirement **316** of the resource requester having the higher authority is used.

Alternatively, an authority may be associated with individual resource requirements **316.** The individual resource requirement **316** can be requested by a resource requester by indicating the associated authority. The solver **404,** or the conflict resolution component **406** is informed by information regarding the relative ranking of the specified authorities. As such, the conflict resolution component **406** can determine which authority, and so associated resource requirement, is to prevail if conflicts exist.

The solver **404,** may be implemented as a state machine. Each time a new, or updated resource request **316** is received, it may be added to a list of current resource requests **316** and the values of resource characteristics to provide to the associated resources **304** of the electronic device may be determined from the dependency information **314** and the resource information **312.**

In addition to providing resource characteristics based on received resource requirements **316,** the policy manager **400** may inform the software components **302** or the resources **304** of changes to resource characteristic values, which may allow the software components **302** or the resources **304** to modify their resource requirements **316.** The software components **302** may register with the policy manager in order to indicate changes they wish to be notified of. As an example provided for clarity of the description, if a browser is operating, it may specify that it needs a display on. The browser may also indicate that an audio component be on in order to playback audio associated with a displayed web page. At some time a screen blanking component that turns off the display when there is no user input after a period of inactivity, provides a resource requirement **316** request indicating that the display should be off. The solver **404,** using the authority information **402,** may determine that the screen blanking component has a greater authority than the browser and so its resource requirement **316** request takes precedence over the browser's. As such, the solver **404** will modify the resource characteristic value to turn off the display. The solver **404** may communicate to the browser that the display has been turned off. As a result, the browser may switch to a suspended mode, in which there is no need to have the audio component on. The browser may change the resource requirements **316** it provided to the solver **404,** which may result in turning off the audio component.

As described above, the policy manager, either **300** or **400,** provides a general framework that allows management of resources **304** of the electronic device **100.** As a result of managing the resources **304** it is possible to reduce the power consumed by the electronic device **100.** The use of the dependency information **314** allows a software component **302** to merely specify the performance it requires from the resources **304,** or alternatively an operating mode it is in, making the incorporation of power management into software components **302** much simpler. Furthermore, the dependency information **314** may be used to provide an abstraction between the generalized resources **304** of electronic devices **100** and a particular implementation, allowing the same policy manager **300** or **400** to be used across different devices **100** by modifying the dependency information **314.** For example, a software component **302** may specify that it requires a display to be on without requiring any knowledge pertaining to the actual implementation of the display in the specific electronic device **100.** The dependency information **314** may provide the required resource characteristic values for a specific implementation of the display on the electronic device **100.**

The resource characteristics and associated values may be provided as a string having, for example, a format of <class>/<name>/<mode>/<characteristic>: [value]. It is contemplated that not every resource characteristic needs to specify all of the <class>, <name>, <mode> and <characteristic> however one or more values need to be provided for each resource characteristic. The class may be used to group different types of resource characteristics together. For example, the <class> may specify one of: application, function or device. The application class may be associated with high-level resource characteristics of an application, which may be used to, for example, specify an operating mode of an application. The function class may be used to provide a generalized function of the electronic device, for example a function may be a display. The device class may be used to provide resource characteristics of specific hard components of the electronic device **100.** Although a particular specification is provided for the resource characteristics and values, it is contemplated that other ways of expressing the resource characteristics of resources **304** of the electronic device, and the associated allowable values can be used.

A dependency between two resource characteristic values may be expressed as a statement between two or more predicates, where the predicates are the resource characteristics and values. For example, a dependency statement may by: DEPENDENCY function/display/brightness: [1.10] NEEDS device/lcd_display/backlight: LOW, which indicates that in order to have function/display/brightness set between [1..10] device/lcd_display/backlight must be set to LOW. From the illustrative dependency it is clear that the dependency information **314** specifies the resource characteristic value of one or more resources **304** needed to provide a particular value for a target resource characteristic.

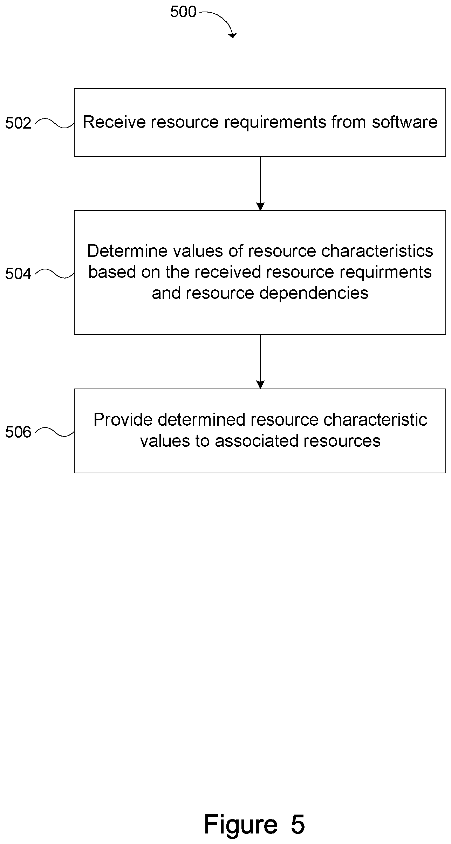

Figure 5 depicts in a flow chart a method of managing resources on an electronic device. The method **500** receives one or more resource requirements from one or more resource requesters, such as software components (**502**). The resource requesters making the requests may be software components **302,** including for example, applications **218** running on the electronic device **200,** an operating system **210** of the electronic device **200** or portions of an application **218** or the OS **210.** The resource requirements specify, either directly or indirectly, a value for a resource characteristic required by the resource requester. The method **500** determines values for resource characteristics from the received resource requirements using the dependency information (**504**). In order to determine the resource characteristic values, the received resource requirements may be considered logical predicates that are required to be true. The dependency information **314** provides the list of other logical predicates, or resource characteristic values, which must be true in order to make the first logical predicate true. The dependency information **314** may be traversed in order to determine all the predicates that need to be true, that is the resource characteristic values, in order to make the received predicates, or the received resource requirements, true. Once all of the performance characteristic values required to provide the received resource requirements are determined, any resource characteristics that do not require a specific value may be set as a lowest value, with regards to performance or power consumption. Once the resource characteristic values are determined, they are provided to the associated resources (**506**). The policy manager **300** or **400** may provide the resource characteristic values to the associated resources in a specified order, for example, in order to ensure power is provided to a resource **304** before attempting to set another resource characteristic value of the resource **304.** Advantageously, as described, the method can manage both externally managed devices that require that values for operating characteristics be provided as well as self managed devices which are provided with resource characteristics, for example specifying a desired level of service that are used by the self-managed device to determine the values for different operating characteristics themselves..

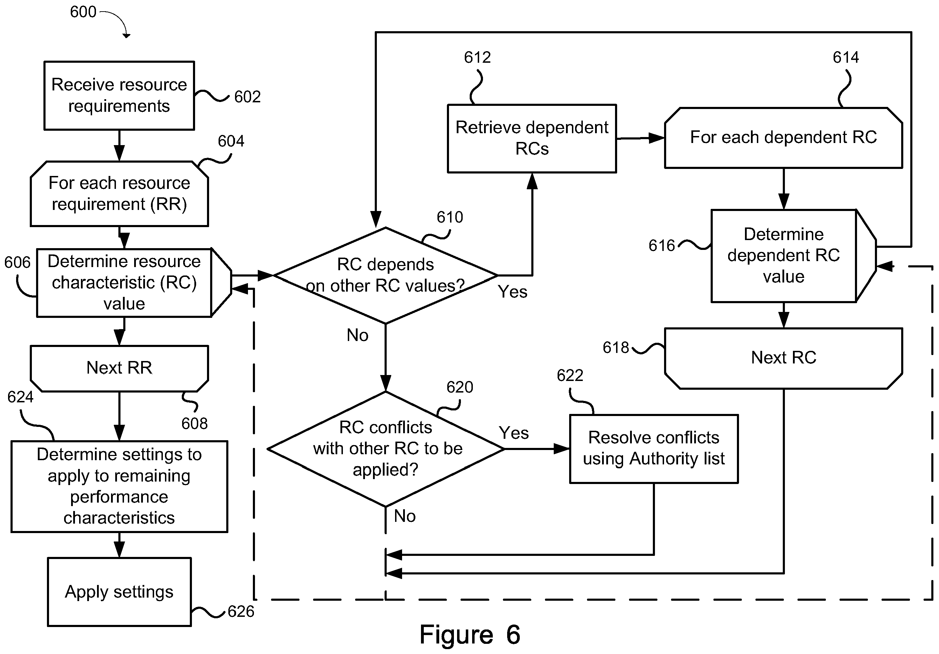

Figure 6 depicts a further method of managing resources. The method **600** receives the resource requirements (**602**) and for each resource requirement (**604, 608**) recursively determines resource characteristic values (**606**) associated with resources **304** required to provide the resource requirement. For each resource characteristic value required in order to provide the resource requirements, it is determined if the resource characteristic value depends on one or more other resource characteristic values (**610**). If it does (Yes at **610**), the resource characteristic values it depends on are retrieved (**612**) and for each of the retrieved dependent resource characteristic values (**614, 618**) the resource characteristic values required for it to be true are recursively determined (**616**) by returning to **610**. If the resource characteristic value does not depend on any other resource characteristics (No at **610**) it is determined if the resource characteristic conflicts with any other resource characteristics to be applied (**620**) and if it does the conflict is resolved using authority information (**622**) to determine which of the resource requesters of the conflicting performance characteristic values has the higher authority, or alternatively which of the resource requirement requests is associated with the higher authority. If there are no conflicts (No at **620**) or if the conflicts have been resolved, processing returns to the previous recursion level, that is **616,** or **606.** Once all of the required resource characteristics values are determined they are provided to the associated resources (**626**). The associated resources may use the resource characteristic values in order to set an associated operating characteristic of the device, or may be used by the resource to determine for itself the values for one or more operating characteristics.

Although not described in detail with regards to method **600,** the set of resource characteristic values to apply may be tracked throughout the method **600** in various ways. For example, each time a resource characteristic value is to be set, it may be added to a list of current resource characteristic values. The list of current resource characteristic values may be used to determine if there is a conflict by checking the list to see if another value is set that is mutually exclusive with the new value. Additionally, the above has described checking for a conflict only on the lowest level of recursion, namely when the resource characteristic does not depend upon any others; however, it is also possible to determine earlier if the resource characteristic value conflicts with any other current resource characteristic values.

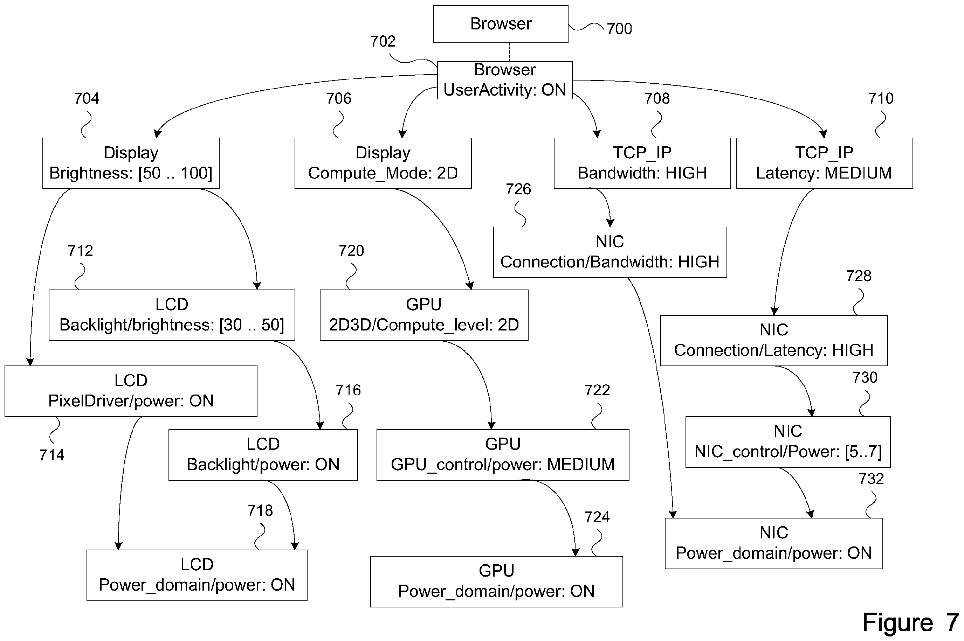

The operation of the policy manager **400,** which includes the conflict resolution component **406,** is further described by way of an example with reference to Figures 7 - 11. The example describes the policy manager **400** operating on an electronic device to control an LCD display resource that comprises hardware components such as an LCD driver and a backlight, a graphics component that can operate in either a 2D rendering mode or a 3D rendering mode, a NIC that can provide either high, medium or low bandwidth as well as high, medium or low latency, and an audio component that can provide either standard quality audio or high quality audio. The example describes the overall operation of the policy manager **400** when one or more applications are running on the electronic device. The illustrative applications include a browser, an audio playback program, a game and a screen blanking application.

Figure 7 depicts a dependency requirement for a browser operating in a user_active mode. The browser may have other operating modes, however, only a single mode is depicted in Figure 7 for clarity of the description.

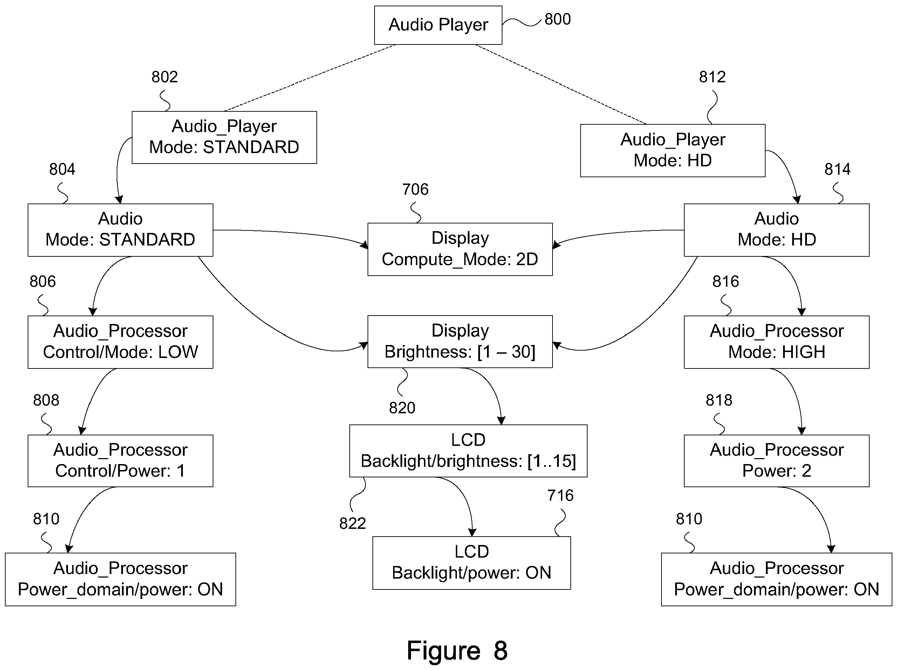

Figure 8 depicts a dependency requirement for an audio player. Two operating modes are depicted, namely a STANDARD playback mode and an HD playback mode.

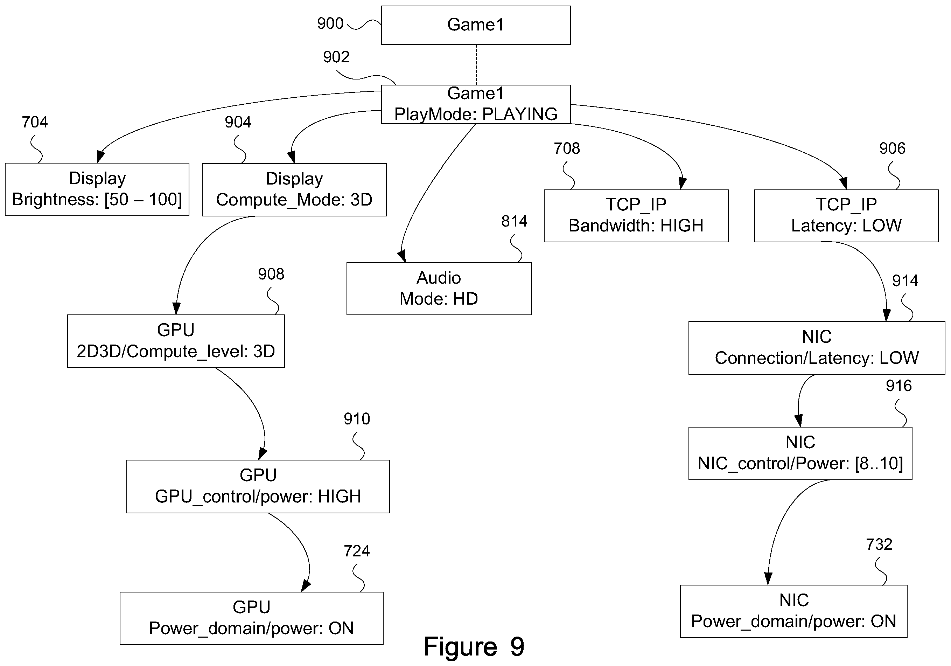

Figure 9 depicts a dependency requirement for a game operating in a PLAYING playmode. Similar to the browser, only a single operating mode is depicted for the game although other modes may be provided.

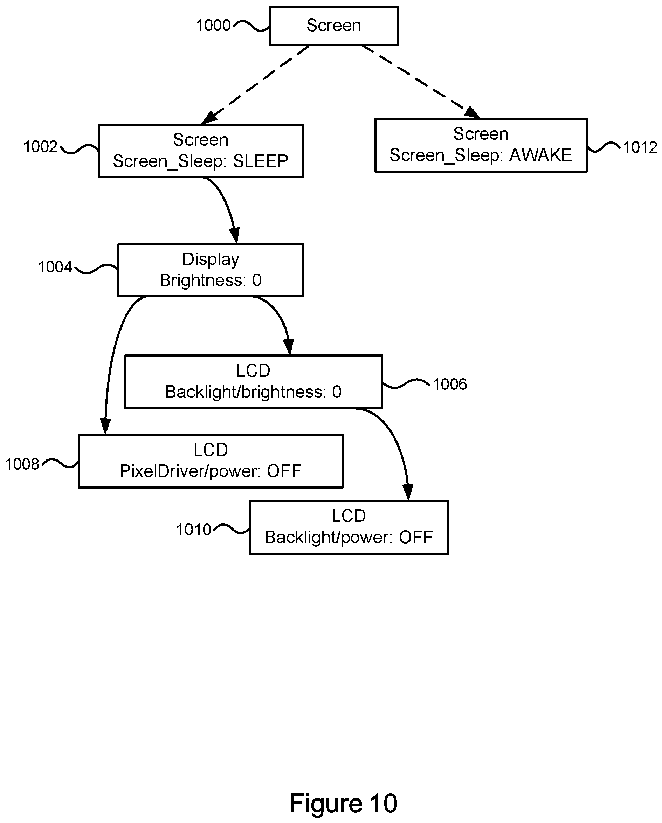

Figure 10 depicts a dependency requirement for the screen blanking application. Similar to the audio player two operating modes are depicted for the screen blanking application; however, only one, namely the SLEEP mode, has any dependencies.

In the example, a user may operate the browser with no other applications running. The browser **700** informs the policy manager **400** of its resource requirements, which may be done by indicating to the policy manager **400** that the browser **700** is in the UserActivity: ON mode **702.** The policy manager **400** receives the new resource requirements and determines the resource characteristic values from the dependency information. As depicted in Figure 7, when the Browser UserActivity is ON **702,** the Display brightness needs to be between 50 - 100 **704,** the display compute mode needs to be 2D **706,** the TCP_IP bandwidth needs to be HIGH **708** and the TCP_IP Latency needs to be MEDIUM **710.** As depicted, each of these resource characteristics in turn depends on other values being set for the resource characteristic values of the resources **304.** The complete resource characteristic values of the resources **304** are determined from the dependency information **314** and the resource requirements. When only the browser **700** is running, the resource characteristic values required are:
Function/Display/Brightness: [50 - 100] **704**
Function/Display/Compute_mode: 2D **706**
Function/TCP_IP/Bandwidth: HIGH **708**
Function/TCP_IP/Latency: MEDIUM **710**
Device/LCD/Backlight/Brightness: [30..50] **712**
Device/LCD/PixelDriver/Power: ON **714**
Device/LCD/Backlight/Power: ON **716**
Device/LCD/Power_domain/Power: ON **718**
Device/GPU/2D3D/ComputeLevel: 2D **720**
Device/GPU/GPU_control/Power: MEDIUM **722**
Device/GPU/Power_domain/Power: ON **724**
Device/NIC/Connection/Bandwidth: HIGH **726**
Device/NIC/Connection/Latency: HIGH **728**
Device/NIC/NIC_control/Power: [5..7] **730**
Device/NIC/Power_domain/Power: ON **732**

Once all of the resource characteristic values are determined from the dependency information **314,** they are provided to the associated resources. In addition to determining and providing the resource characteristic and values determined from the resource requests and the dependency information, it is further possible to determine resource characteristic values for the remaining resource characteristics of resources not explicitly determined from the resource requirements. The values for the remaining resource characteristics may be set to values that makes the least demand on the associated resource. For example, it is assumed above that the browser **700** does not require any sound, and as such the sound processor may be turned off. Alternatively, the resources themselves may have default operating characteristics to use. Once the resource characteristic values are provided, the resources utilize the information to control one or more operating characteristics, either directly by setting the operating characteristic value based on the resource characteristic value, or indirectly by using the resource characteristic values to determine one or more operating characteristic values.

To continue with the example, while using the browser **700,** it is assumed that the user begins to listen to the audio player **800.** Initially the audio player **800** is in the STANDARD playback mode **802.** The audio player **800** informs the policy manager **400** of the resource requirements by specifying the playback mode. The policy manager **400** adds the resource requirements to the resource requirements of the browser **700** and determines all of the required resource characteristic values. The resource characteristic values required by the browser **700** are as described above. Similarly, the policy manager **400** will determine the resource characteristic values for the STANDARD mode of the audio player **800** as follows:
Function/Audio/Mode: STANDARD **804**
Function/Display/Brightness: [1 .. 30] **820**
Function/Display/Compute_mode: 2D **706**
Device/LCD/Backlight/Brightness: [1..15] **822**
Device/LCD/PixelDriver/Power: ON **714**
Device/LCD/Backlight/Power: ON **716**
Device/LCD/Power_domain/Power: ON **718**
Device/GPU/2D3D/ComputeLevel: 2D **720**
Device/GPU/GPU_control/Power: MEDIUM **722**
Device/GPU/Power_domain/Power: ON **724**
Device/Audio_Processor/control/Mode: LOW **806**
Device/Audio_Processor/control/Power: 1 **808**
Device/Audio_Processor/Power_domain/Power: ON **810**

It is noted that the dependencies of the display compute_mode: 2D **706** and display brightness [50..100] **704** are not depicted in Figure 8 for brevity and would be the same as shown in Figure 7. As can be seen, both the audio player **800** and the browser **700** require the display, however there is no conflict between the two resource requirements. As such, the policy manager **400** is able to provide the determined resource characteristic values to the resources **304.**

At a later point in time, the user of the audio player **800** switches to the high definition (HD) mode **812,** and the policy manager **400** is informed of a new resource requirement. As a result, the policy manager **400** changes the resource characteristic values, which again have no conflicts, to reflect the new request. In particular, the following resource characteristics are changed to new values:
Function/Audio/Mode: HD **814**
Device/Audio_Processor/control/Mode: HIGH **816**
Device/Audio_Processor/control/Power: 2 **818**

Continuing with the example, the user turns off the audio player **800** and begins playing a game **900** while continuing to use the browser **700.** The game **900** indicates its resource requirement to the policy manager **400.** The PLAYING mode **902** of the game requires that the Display brightness be between 50 and **100 704,** the display compute mode be 3D **904,** the audio be in the HD mode **814,** the TCP_IP provide high bandwidth **708** and low latency **906.** Of the performance requests by the browser **700** and the game **900,** the display compute mode and the TCP_IP latency requirements are different. However, the 3D compute mode encompasses the 2D compute and so by setting the resource characteristic value to 3D both resource requirements are met. Similarly the TCP_IP latency LOW satisfies the TCP_IP latency HIGH resource characteristic value required by the browser **700.** As such, the policy manager **400** determines the set of resource characteristic values to apply as follows:
Function/Display/Brightness: [50 - 100] **704**
Function/Display/Compute_mode:3D **904**
Function/Audio/Mode: HD **814**
Function/TCP_IP/Bandwidth: HIGH **708**
Function/TCP_IP/Latency: LOW **906**
Device/LCD/Backlight/Brightness: [30..50] **712**
Device/LCD/PixelDriver/Power: ON **714**
Device/LCD/Backlight/Power: ON **716**
Device/LCD/Power_domain/Power: ON **718**
Device/GPU/2D3D/ComputeLevel: 3D **908**
Device/GPU/GPU_control/Power: HIGH **910**
Device/GPU/Power_domain/Power: ON **724**
Device/Audio_Processor/control/Mode: HIGH **816**
Device/Audio_Processor/control/Power: 2 **818**
Device/NIC/Connection/Bandwidth: HIGH **726**
Device/NIC/Connection/Latency: LOW **914**
Device/NIC/NIC_control/Power: [8..10] **916**
Device/NIC/Power_domain/Power: ON **732**

Continuing with the example, at some time while playing the game **900** and using the browser **700,** the screen blanking application **1000** begins running, initially in the AWAKE mode **1012** which has no further resource characteristic value requirements. At a later time, the screen blanking application **1000** determines it should switch to the SLEEP mode **1002,** for example if no user interaction has been received for a minute. The screen blanking application **1000** indicates its resource requirements to the policy manager **400** by indicating that it is in the SLEEP mode **1002.** The policy manager **400** determines the resource characteristic values required from the various resource requirements, however, there is now a conflict between the resource requirements of the screen blanking application **1000,** the browser **700** and game **900.** The screen blanking application **1000** requests to have the display off, indicated by a value of 0 **1004,** while the browser **700** and the game **900** require the screen to be on, indicated by a value greater than 0. Since the two values for the resource characteristics, required in order to fulfill the resource requirements, are mutually exclusive, the policy manager **400** uses the authority information **402** to resolve the conflict.

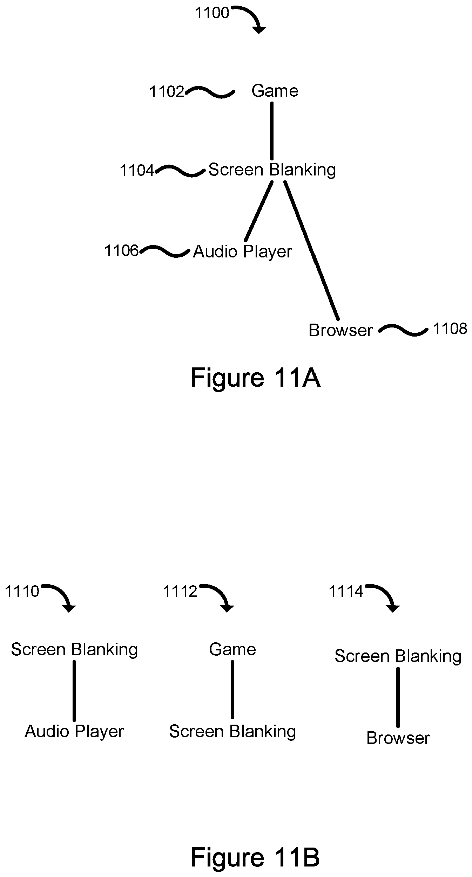

Figure 11A depicts illustrative authority information associated with the applications of Figures 6 - 10. As depicted by the authority information **1100,** the Game **1102** has a higher authority than the Screen **1104,** which in turn has a higher authority than both the audio player **1106** and the browser **1108.** The authority information may be provided as relative authorities between software components, or resource requestors capable of providing performance requests. As depicted, there is no authority information provided between the audio player **1106** and the browser **1108.** The use of a tree structure to represent the authority information, rather than an absolute ranking, allows greater flexibility in assigning authorities. The authority information may be derived from a plurality of relative authorities **1110, 1112, 1114** as depicted in Figure 11B.

Returning to the example, using the authority information **1100,** the policy manager **400** determines that the game **1102** has a higher authority than the screen blanking application **1104** and as such the display remains on, and the resource characteristic values would be determined as described above with regards to only the browser **700** and game **900** running.

Finally, if the user stops the game **900,** the game's resource requirements will be removed from the policy manager **400.** If the screen blanking application **1000** again provides it's resource requirements to be in the SLEEP mode, there will be a conflict between the screen blanking application **1000** and the browser **700** as described above. However, now the screen blanking application **1000** has the higher authority and as such the display will be turned off **1004,** which will require the LCD pixel driver to be off **1008,** and the LCD backlight to have a brightness of 0 **1006** which in turn requires the power of the backlight to be off **1010.** Once the display is turned off, the policy manager **400** may indicate the change to the browser **700,** which in response may determine that it does not require any specific resource characteristics with the display off, and so may indicate the changed resource requirements to the policy manager **400,** which will subsequently determine the resource characteristic values for the resources **304** and provide them accordingly.

As described above, the policy manager **300** or **400** can manage the characteristics of resources **304** of an electronic device **100.** The policy manager **300** or **400** uses dependency information **314** to determine all the resources characteristic values that need to be set at a particular time. The dependency information **314** allows a software component **302** to simply specify it's operating state, or it's resource requirements and the policy manager **300** or **400** determine all of the required resource characteristic values for the specific resources **304** of the electronic device **100.** Advantageously, the policy manager **300** or **400** can be used for different actual hardware implementations by simply modifying the dependency information **314.** Furthermore, the policy manager **300** or **400** can communicate resource changes to software components **302,** which in turn can use the information to possibly change their operating mode and change their performance requests. The policy manager **300** or **400** provides an efficient means of managing the performance and power consumption of the electronic device **100** as well as resolving any conflicts that may arise between differing performance requests.

Although the above discloses example methods, apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware.

## Claims

1. A method of managing resources of an electronic device (200) comprising:
receiving resource requirements (316) from one or more resource requesters (302) executing on the electronic device;
determining resource characteristic values for a plurality of resource characteristics (318) associated with resources (304) of the electronic device (200) based on the received resource requirements (316) and dependency information (314) defining hierarchical dependency requirements between defined resource characteristic values, wherein each hierarchical dependency requirement between resource characteristic values is expressed as a statement between a target resource characteristic value for one of the plurality of resource characteristics and one or more dependent resource characteristic values for one or more other resource characteristics of the plurality of resource characteristics, the one or more dependent resource characteristic values required to provide the target resource characteristic value; and
providing the determined resource characteristic values for the plurality of resource characteristics (318) to the respective associated resources (304) of the electronic device (200).

2. The method of claim 1, further comprising:
a) receiving one or more of the determined resource characteristic values at a self-managed component;
determining from the one or more resource characteristic values one or more operational characteristic (320) values of the self managed component; and applying the one or more operational characteristics (320) values to the self-managed component; and/or
b) receiving one or more of the determined resource characteristic values at an externally managed component; and
applying the received one or more resource characteristics values to one or more operational characteristics (320) of the externally managed component.

3. The method of claim 1 or 2, wherein determining the resource characteristic values comprises determining the resource characteristic values that satisfy the received resource requirements (316) and provide a lowest power consumption of the associated resources (304) of the electronic device (200), wherein each of the received resource requirements (316) optionally provides a value for respective pre- defined resource characteristics having a range of allowable values, and wherein each dependency optionally specifies one or more dependent resource characteristic values required in order to provide a target resource characteristic value.

4. The method of claim 3, wherein the pre-defined resource characteristics include one or more of:
application resource characteristics for defining resource characteristic values of an application that can be executed on the electronic device (200);
functional resource characteristics for defining resource characteristic values of functionality provided by the electronic device (200); and
device resource characteristics for defining resource characteristics values of hardware components of the electronic device (200),
wherein the dependency information optionally comprises one or more of:
a dependency requirement between an application resource characteristic value or range of values and a device resource characteristic value or range of values;
a dependency requirement between an application resource characteristic value or range of values and a functional resource characteristic value or range of values; and
a dependency requirement between a functional resource characteristic value or range of values and a device resource characteristic value or range of values.

5. The method of any one of claims 1 - 4, further comprising:
associating a respective authority indicator with received resource requirements;
determining that a conflict exists between determined resource characteristic values; and
resolving the conflict using authority information (402) specifying relative authority precedence associated with a plurality of authority indicators, including the respective authority indicator associated with each received resource requirement (316).

6. The method of any one of claims 1 - 5, further comprising:
receiving one or more revised resource requirements (316);
determining updated resource characteristic values (318) from the revised resource requirements;
providing the updated resource characteristics values (318) to the associated resources (304);
notifying one or more of the resource requesters (302) of at least one of the updated resource characteristic values; and
optionally registering one or more resource requesters (302) for notification of a change to one or more resource characteristic values.

7. The method of any one of claims 1 - 6, wherein the resource requesters (302) comprise software components executing on the electronic device, and one or more of the resources (304) comprise hardware components of the electronic device, wherein the resource characteristic values are provided to hardware components using an associated device driver (214), and wherein resource requirements (316) and associated resource characteristic values optionally define one or more of modes of functionality or performance levels of the hardware component.

8. An electronic device (200) for managing performance of resources (304) of the electronic device (200), the electronic device (200) comprising:
a processor (202) for processing instructions;
a storage unit (204) for storing instructions (206) and data, the instructions (206) when executed by the processor (202) configuring the electronic device (200) to provide a policy manager (212) comprising:
an interface (306) for receiving resource requirements (316) from one or more resource requesters (302) executing on the electronic device (200);
a solver (310) for determining values for a plurality of resource characteristics (318) associated with resources (304) of the electronic device (200) based on the received resource requirements (316) and dependency information (314) defining hierarchical dependency requirements between defined resource characteristic values; and
a resource interface (308) for providing the determined resource characteristic (318) values to a respective associated resources (304) of the electronic device (200);
wherein each hierarchical dependency requirement between resource characteristic values is expressed as a statement between a target resource characteristic value for one of the plurality of resource characteristics and one or more dependent resource characteristic values for one or more other resource characteristics of the plurality of resource characteristics, the one or more dependent resource characteristic values required to provide the target resource characteristic value.

9. The electronic device of claim 8, wherein one or more of the resources (304) of the device comprise:
a self-managed component that receives the one or more resource characteristic values and determines one or more operational characteristics (320) to apply to the self-managed component based on the resource characteristic values; and/or
an externally-managed component that can apply the one or more resource characteristic values to one or more operational characteristics (320) of the externally managed component.

10. The electronic device of claim 8 or 9, wherein the solver (310) determines the resource characteristic values by determining the resource characteristic values that satisfy the received resource requirements (316) and provide a lowest power consumption of the resources (304) of the electronic device (200).

11. The electronic device of any one of claims 8 - 10, further comprising:
resource information (312) defining for each of a plurality of resources (304) of the electronic device (200) a plurality of resource characteristics and respective allowable values; and
the dependency information (314) defining dependency requirements between resource characteristic values,
wherein each dependency requirement optionally specifies one or more dependent resource characteristic values required in order to provide a target resource characteristic value of the dependency requirement.

12. The electronic device of any one of claims 8 - 11, wherein the defined resource characteristics include one or more of:
application resource characteristics for defining characteristic values of an application that can be executed on the electronic device (200);
functional resource characteristics for defining characteristic values of functionality provided by the electronic device (200); and
device resource characteristics for defining characteristics values of hardware components of the electronic device (200),
wherein the dependency information (314) comprises one or more of:
a dependency requirement between an application resource characteristic value or range of values and a device resource characteristic value or range of values;
a dependency requirement between an application resource characteristic value or range of values and a functional resource characteristic value or range of values; and
a dependency requirement between a functional resource characteristic value or range of values and a device resource characteristic value or range of values.

13. The electronic device of any one of claims 8 - 12, wherein:
the received resource requirements (316) are associated with a respective authority indicator; and
the solver (310) determines that a conflict exists between determined resource characteristic values, and resolves the conflict using authority information (402) specifying a relative authority between a plurality of authority indicators, including the respective authority indicator associated with each received resource requirement.

14. The electronic device of any one of claims 8 - 13, wherein:
the interface (306) for receiving resource requirements is further for receiving a revised resource requirement from one or more of the resource requesters that changes the received resource requirements;
the solver (310) further determines updated values for resource characteristics from the revised resource requirements and notifies the one or more of the resource requesters (302) of at least one of the updated resource characteristic values; and
the resource interface provides the updated values of resource characteristics (318) to the associated resources (304);
wherein the policy manager (300) optionally registers the one or more resource requesters (302) for notification of a change to one or more resource characteristic values.

15. The electronic device of any one of claims 8 - 14, wherein the resource requesters (302) comprise software components executing on the electronic device (200), and one or more of the resources (304) comprise hardware components of the electronic device (200), wherein the resource characteristic values are provided to hardware components using an associated device driver.

## Patentansprüche

1. Verfahren zum Ressourcenmanagement einer elektronischen Vorrichtung (200), umfassend:
Empfangen von Ressourcenanforderungen (316) von einem oder mehreren Ressourcenanforderern (302), die auf der elektronischen Vorrichtung ausgeführt werden;
Bestimmen von Ressourceneigenschaftswerten für eine Vielzahl von Ressourceneigenschaften (318) in Verbindung mit Ressourcen (304) der elektronischen Vorrichtung (200) auf Grundlage der empfangenen Ressourcenanforderungen (316) und von Abhängigkeitsinformationen (314), die hierarchische Abhängigkeitsanforderungen zwischen definierten Ressourceneigenschaftswerten definieren, wobei jede hierarchische Abhängigkeitsanforderung zwischen Ressourceneigenschaftswerten als eine Aussage zwischen einem Zielressourceneigenschaftswert für eine aus der Vielzahl von Ressourceneigenschaften und einem oder mehreren abhängigen Ressourceneigenschaftswerten für eine oder mehrere andere Ressourceneigenschaften aus der Vielzahl von Ressourceneigenschaften ausgedrückt ist, wobei der eine oder die mehreren abhängigen Ressourceneigenschaftswerte erforderlich sind, um den Zielressourceneigenschaftswert bereitzustellen; und
Bereitstellen der bestimmten Ressourceneigenschaftswerte für die Vielzahl von Ressourceneigenschaften (318) für die jeweiligen verbundenen Ressourcen (304) der elektronischen Vorrichtung (200).

2. Verfahren nach Anspruch 1, ferner umfassend:
a) Empfangen von einem oder mehreren der bestimmten Ressourceneigenschaftswerte an einer selbstverwalteten Komponente;
Bestimmen, anhand des einen oder der mehreren Ressourceneigenschaftswerte, von einem oder mehreren Betriebseigenschaftswerten (320) der selbstverwalteten Komponente; und Anwenden des einen oder der mehreren Betriebseigenschaftswerte (320) auf die selbstverwaltete Komponente; und/oder
b) Empfangen von einem oder mehreren der bestimmten Ressourceneigenschaftswerte an einer extern verwalteten Komponente; und
Anwenden des/der empfangenen einen oder mehreren Ressourceneigenschaftswerte auf eine oder mehrere Betriebseigenschaften (320) der extern verwalteten Komponente.

3. Verfahren nach Anspruch 1 oder 2, wobei das Bestimmen der Ressourceneigenschaftswerte das Bestimmen der Ressourceneigenschaftswerte umfasst, die die empfangenen Ressourcenanforderungen (316) erfüllen und einen geringsten Stromverbrauch der verbundenen Ressourcen (304) der elektronischen Vorrichtung (200) bereitstellen, wobei jede der empfangenen Ressourcenanforderungen (316) optional einen Wert für jeweilige vordefinierte Ressourceneigenschaften bereitstellt, die eine Spanne an zulässigen Werten aufweisen, und wobei jede Abhängigkeit optional einen oder mehrere abhängige Ressourceneigenschaftswerte spezifiziert, die erforderlich sind, um einen Zielressourceneigenschaftswert bereitzustellen.

4. Verfahren nach Anspruch 3, wobei die vordefinierten Ressourceneigenschaften eines oder mehrere des Folgenden beinhalten:
Anwendungsressourceneigenschaften zum Definieren von Ressourceneigenschaftswerten einer Anwendung, die auf der elektronischen Vorrichtung (200) ausgeführt werden kann;
Funktionsressourceneigenschaften zum Definieren von Ressourceneigenschaftswerten von durch die elektronische Vorrichtung (200) bereitgestellter Funktionalität; und
Vorrichtungsressourceneigenschaften zum Definieren von Ressourceneigenschaftswerten von Hardwarekomponenten der elektronischen Vorrichtung (200),
wobei die Abhängigkeitsinformationen optional eines oder mehrere des Folgenden umfassen:
eine Abhängigkeitsanforderung zwischen einem Anwendungsressourceneigenschaftswert oder einer Spanne an Werten und einem Vorrichtungsressourceneigenschaftswert oder einer Spanne an Werten;
eine Abhängigkeitsanforderung zwischen einem Anwendungsressourceneigenschaftswert oder einer Spanne an Werten und einem Funktionsressourceneigenschaftswert oder einer Spanne an Werten; und
eine Abhängigkeitsanforderung zwischen einem Funktionsressourceneigenschaftswert oder einer Spanne an Werten und einem Vorrichtungsressourceneigenschaftswert oder einer Spanne an Werten.

5. Verfahren nach einem der Ansprüche 1-4, ferner umfassend:
Verbinden eines jeweiligen Autoritätsindikators mit empfangenen Ressourcenanforderungen;
Bestimmen, dass es einen Konflikt zwischen bestimmten Ressourceneigenschaftswerten gibt; und
Lösen des Konflikts unter Verwendung von Autoritätsinformationen (402), die relativen Autoritätsvorrang in Verbindung mit einer Vielzahl von Autoritätsindikatoren spezifizieren, darunter dem jeweiligen Autoritätsindikator in Verbindung mit jeder empfangenen Ressourcenanforderung (316).

6. Verfahren nach einem der Ansprüche 1-5, ferner umfassend:
Empfangen von einer oder mehreren überarbeiteten Ressourcenanforderungen (316);
Bestimmen von aktualisierten Ressourceneigenschaftswerten (318) von den überarbeiteten Ressourcenanforderungen;
Bereitstellen der aktualisierten Ressourceneigenschaftswerte (318) für die verbundenen Ressourcen (304);
Benachrichtigen eines oder mehrerer der Ressourcenanforderer (302) über mindestens einen der aktualisierten Ressourceneigenschaftswerte; und
optional Registrieren eines oder mehrerer Ressourcenanforderer (302) für die Benachrichtigung über eine Änderung eines oder mehrerer Ressourceneigenschaftswerte.

7. Verfahren nach einem der Ansprüche 1-6, wobei die Ressourcenanforderer (302) Softwarekomponenten umfassen, die auf der elektronischen Vorrichtung ausgeführt werden, und eine oder mehrere von den Ressourcen (304) Hardwarekomponenten der elektronischen Vorrichtung umfassen, wobei die Ressourceneigenschaftswerte Hardwarekomponenten unter Verwendung eines verbundenen Vorrichtungstreibers (214) bereitgestellt werden, und wobei Ressourcenanforderungen (316) und verbundene Ressourceneigenschaftswerte optional einen oder mehrere von Modi von Funktionalität oder Leistungsstufen der Hardwarekomponente definieren.

8. Elektronische Vorrichtung (200) zum Leistungsmanagement von Ressourcen (304) der elektronischen Vorrichtung (200), wobei die elektronische Vorrichtung (200) Folgendes umfasst:
einen Prozessor (202) zum Verarbeiten von Anweisungen;
eine Speichereinheit (204) zum Speichern von Anweisungen (206) und Daten, wobei die Anweisungen (206), wenn sie durch den Prozessor (202) ausgeführt werden, die elektronische Vorrichtung (200) konfigurieren, um einen Richtlinienmanager (212) bereitzustellen, umfassend:
eine Schnittstelle (306) zum Empfangen von Ressourcenanforderungen (316) von einem oder mehreren Ressourcenanforderern (302), die auf der elektronischen Vorrichtung (200) ausgeführt werden;
einen Löser (310) zum Bestimmen von Werten für eine Vielzahl von Ressourceneigenschaften (318) in Verbindung mit Ressourcen (304) der elektronischen Vorrichtung (200) auf Grundlage der empfangenen Ressourcenanforderungen (316) und von Abhängigkeitsinformationen (314), die hierarchische Abhängigkeitsanforderungen zwischen definierten Ressourceneigenschaftswerten definieren; und
eine Ressourcenschnittstelle (308) zum Bereitstellen der bestimmten Ressourceneigenschaftswerte (318) für jeweilige verbundene Ressourcen (304) der elektronischen Vorrichtung (200) ;
wobei jede hierarchische Abhängigkeitsanforderung zwischen Ressourceneigenschaftswerten als eine Aussage zwischen einem Zielressourceneigenschaftswert für eine aus der Vielzahl von Ressourceneigenschaften und einem oder mehreren abhängigen Ressourceneigenschaftswerten für eine oder mehrere andere Ressourceneigenschaften aus der Vielzahl von Ressourceneigenschaften ausgedrückt ist, wobei der eine oder die mehreren abhängigen Ressourceneigenschaftswerte erforderlich sind, um den Zielressourceneigenschaftswert bereitzustellen.

9. Elektronische Vorrichtung nach Anspruch 8, wobei eine oder mehrere der Ressourcen (304) der Vorrichtung Folgendes umfassen: eine selbstverwaltete Komponente, die den einen oder die mehreren Ressourceneigenschaftswerte empfängt und eine oder mehrere Betriebseigenschaften (320) bestimmt, um diese auf die selbstverwaltete Komponente auf Grundlage der Ressourceneigenschaftswerte anzuwenden; und/oder
eine extern verwaltete Komponente, die den einen oder die mehreren Ressourceneigenschaftswerte auf eine oder mehrere Betriebseigenschaften (320) der extern verwalteten Komponente anwenden kann.

10. Elektronische Vorrichtung nach Anspruch 8 oder 9, wobei der Löser (310) die Ressourceneigenschaftswerte bestimmt, indem die Ressourceneigenschaftswerte bestimmt werden, die die empfangenen Ressourcenanforderungen (316) erfüllen und einen geringsten Stromverbrauch der Ressourcen (304) der elektronischen Vorrichtung (200) bereitstellen.

11. Elektronische Vorrichtung nach einem der Ansprüche 8-10, ferner umfassend:
Ressourceninformationen (312), die für jede aus einer Vielzahl von Ressourcen (304) der elektronischen Vorrichtung (200) eine Vielzahl von Ressourceneigenschaften und jeweiligen zulässigen Werten definieren; und
die Abhängigkeitsinformationen (314), die Abhängigkeitsanforderungen zwischen Ressourceneigenschaftswerten definieren,
wobei jede Abhängigkeitsanforderung optional einen oder mehrere abhängige Ressourceneigenschaftswerte definiert, die erforderlich sind, um einen Zielressourceneigenschaftswert der Abhängigkeitsanforderung bereitzustellen.

12. Elektronische Vorrichtung nach einem der Ansprüche 8-11, wobei die definierten Ressourceneigenschaften eines oder mehrere des Folgenden beinhalten:
Anwendungsressourceneigenschaften zum Definieren von Eigenschaftswerten einer Anwendung, die auf der elektronischen Vorrichtung (200) ausgeführt werden kann;
Funktionsressourceneigenschaften zum Definieren von Eigenschaftswerten von durch die elektronische Vorrichtung (200) bereitgestellter Funktionalität; und
Vorrichtungsressourceneigenschaften zum Definieren von Eigenschaftswerten von Hardwarekomponenten der elektronischen Vorrichtung (200),
wobei die Abhängigkeitsinformationen (314) eines oder mehrere des Folgenden umfassen:
eine Abhängigkeitsanforderung zwischen einem Anwendungsressourceneigenschaftswert oder einer Spanne an Werten und einem Vorrichtungsressourceneigenschaftswert oder einer Spanne an Werten;
eine Abhängigkeitsanforderung zwischen einem Anwendungsressourceneigenschaftswert oder einer Spanne an Werten und einem Funktionsressourceneigenschaftswert oder einer Spanne an Werten; und
eine Abhängigkeitsanforderung zwischen einem Funktionsressourceneigenschaftswert oder einer Spanne an Werten und einem Vorrichtungsressourceneigenschaftswert oder einer Spanne an Werten.

13. Elektronische Vorrichtung nach einem der Ansprüche 8-12, wobei:
die empfangenen Ressourcenanforderungen (316) mit einem jeweiligen Autoritätsindikator verbunden sind; und
der Löser (310) bestimmt, dass es einen Konflikt zwischen bestimmten Ressourceneigenschaftswerten gibt und den Konflikt unter Verwendung von Autoritätsinformationen (402) löst, die eine relative Autorität zwischen einer Vielzahl von Autoritätsindikatoren spezifizieren, darunter dem jeweiligen Autoritätsindikator in Verbindung mit jeder empfangenen Ressourcenanforderung.

14. Elektronische Vorrichtung nach einem der Ansprüche 8-13, wobei:
die Schnittstelle (306) zum Empfangen von Ressourcenanforderungen ferner dem Empfangen einer überarbeiteten Ressourcenanforderung von einem oder mehreren der Ressourcenanforderer dient, die die empfangenen Ressourcenanforderungen ändert;
der Löser (310) ferner aktualisierte Werte für Ressourceneigenschaften von den überarbeiteten Ressourcenanforderungen bestimmt und den einen oder die mehreren der Ressourcenanforderer (302) über mindestens einen der aktualisierten Ressourceneigenschaftswerte benachrichtigt; und die Ressourcenschnittstelle die aktualisierten Werte von Ressourceneigenschaften (318) den verbundenen Ressourcen (304) bereitstellt;
wobei der Richtlinienmanager (300) optional den einen oder die mehreren Ressourcenanforderer (302) zur Benachrichtigung über eine Änderung eines oder mehrerer Ressourceneigenschaftswerte registriert.

15. Elektronische Vorrichtung nach einem der Ansprüche 8-14, wobei die Ressourcenanforderer (302) Softwarekomponenten umfassen, die auf der elektronischen Vorrichtung (200) ausgeführt werden, und eine oder mehrere der Ressourcen (304) Hardwarekomponenten der elektronischen Vorrichtung (200) umfassen, wobei die Ressourceneigenschaftswerte Hardwarekomponenten unter Verwendung eines verbundenen Vorrichtungstreibers bereitgestellt werden.

## Revendications

1. Procédé de gestion de ressources d'un dispositif électronique (200) comprenant :
le fait de recevoir des exigences de ressources (316) en provenance d'un ou plusieurs demandeurs de ressources (302) s'exécutant sur le dispositif électronique ;
le fait de déterminer des valeurs de caractéristiques de ressources pour une pluralité de caractéristiques de ressources (318) associées à des ressources (304) du dispositif électronique (200) sur la base des exigences de ressources (316) reçues et des informations de dépendance (314) définissant des exigences de dépendance hiérarchique entre des valeurs de caractéristiques de ressources définies, dans lequel chaque exigence de dépendance hiérarchique entre des valeurs de caractéristiques de ressources est exprimée en tant qu'énoncé entre une valeur de caractéristique de ressource cible pour une de la pluralité de caractéristiques de ressources et une ou plusieurs valeurs de caractéristiques de ressources dépendantes pour un ou plusieurs caractéristiques de ressources de la pluralité de caractéristiques de ressources, les une ou plusieurs valeurs de caractéristiques de ressources dépendantes requises pour fournir la valeur de caractéristique de ressource cible ; et
le fait de fournir les valeurs de caractéristiques de ressources déterminées pour la pluralité de caractéristiques de ressources (318) aux ressources (304) associées respectives du dispositif électronique (200).

2. Procédé selon la revendication 1, comprenant en outre :
a) le fait de recevoir une ou plusieurs des valeurs de caractéristiques de ressources déterminées au niveau d'un composant autogéré ;
le fait de déterminer à partir des une ou plusieurs valeurs de caractéristiques de ressources une ou plusieurs valeurs de caractéristiques opérationnelles (320) du composant autogéré ; et
le fait d'appliquer les une ou plusieurs valeurs de caractéristiques opérationnelles (320) au composant autogéré ; et/ou
b) le fait de recevoir une ou plusieurs des valeurs de caractéristiques de ressources déterminées au niveau d'un composant géré de manière externe ; et
le fait d'appliquer les une ou plusieurs valeurs de caractéristiques de ressources à une ou plusieurs caractéristiques opérationnelles (320) du composant géré de manière externe.

3. Procédé selon la revendication 1 ou 2, dans lequel le fait de déterminer les valeurs de caractéristiques de ressources comprend le fait de déterminer les valeurs de caractéristiques de ressources qui répondent aux exigences de ressources (316) reçues et fournissent une consommation d'énergie la plus basse des ressources (304) associées du dispositif électronique (200), dans lequel chacune des exigences de ressources (316) reçues fournit facultativement une valeur pour des caractéristiques de ressources prédéfinies respectives ayant une plage de valeurs admissibles, et dans lequel chaque dépendance spécifie facultativement une ou plusieurs valeurs de caractéristiques de ressources dépendantes requises afin de fournir une valeur de caractéristique de ressource cible.

4. Procédé selon la revendication 3, dans lequel les caractéristiques de ressources prédéfinies comportent une ou plusieurs parmi :
des caractéristiques de ressources d'application pour définir des valeurs de caractéristiques de ressources d'une application qui peut être exécutée sur le dispositif électronique (200) ;
des caractéristiques de ressources fonctionnelles pour définir des valeurs de caractéristiques de ressources d'une fonctionnalité fournie par le dispositif électronique (200) ; et
des caractéristiques de ressources de dispositif pour définir des valeurs de caractéristiques de ressources de composants matériels du dispositif électronique (200),
dans lequel les informations de dépendance comprennent une ou plusieurs parmi :
une exigence de dépendance entre une valeur de caractéristique de ressource d'application ou une plage de valeurs et une valeur de caractéristique de ressource de dispositif ou une plage de valeurs ;
une exigence de dépendance entre une valeur de caractéristique de ressource d'application ou une plage de valeurs et une valeur de caractéristique de ressource fonctionnelle ou une plage de valeurs ; et
une exigence de dépendance entre une valeur de caractéristique de ressource fonctionnelle ou une plage de valeurs et une valeur de caractéristique de ressource de dispositif ou une plage de valeurs.

5. Procédé selon l'une quelconque des revendications 1-4, comprenant en outre :
le fait d'associer un indicateur d'autorité respective avec des exigences de ressources reçues ;
le fait de déterminer qu'un conflit existe entre des valeurs de caractéristiques de ressources déterminées ; et
le fait de résoudre le conflit en utilisant des informations d'autorité (402) spécifiant une primauté d'autorité relative associée à une pluralité d'indicateurs d'autorité, y compris l'indicateur d'autorité respective associé à chaque exigence de ressource (316) reçue.

6. Procédé selon l'une quelconque des revendications 1-5, comprenant en outre :
le fait de recevoir une ou plusieurs exigences de ressources (316) révisées ;
le fait de déterminer des valeurs de caractéristiques de ressources (318) mises à jour à partir des exigences de ressources révisées ;
le fait de fournir les valeurs de caractéristiques de ressources (318) mises à jour aux ressources (304) associées ;
le fait de notifier un ou plusieurs demandeurs de ressources (302) d'au moins une des valeurs de caractéristiques de ressources mises à jour ; et
facultativement le fait d'enregistrer un ou plusieurs demandeurs de ressources (302) pour la notification d'un changement vers une ou plusieurs valeurs de caractéristiques de ressources.

7. Procédé selon l'une quelconque des revendications 1-6, dans lequel les demandeurs de ressources (302) comprennent des composants logiciels s'exécutant sur le dispositif électronique, et une ou plusieurs des ressources (304) comprennent des composants matériels du dispositif électronique, dans lequel les valeurs de caractéristiques de ressources sont fournies aux composants matériels en utilisant un pilote de dispositif (214) associé, et dans lequel des exigences de ressources (316) et des valeurs de caractéristiques de ressources associées définissent facultativement un ou plusieurs parmi des modes de fonctionnalité ou des niveaux de performances du composant matériel.

8. Dispositif électronique (200) pour gérer des performances de ressources (304) du dispositif électronique (200), le dispositif électronique (200) comprenant :
un processeur (202) pour traiter des instructions ;
une unité de mise en mémoire (204) pour mettre en mémoire des instructions (206) et des données, les instructions (206) lorsqu'elles sont exécutées par le processeur (202) configurant le dispositif électronique (200) pour fournir un gestionnaire de politiques (212) comprenant :
une interface (306) pour recevoir des exigences de ressources (316) à partir d'un ou plusieurs demandeurs de ressources (302) s'exécutant sur le dispositif électronique (200) ;
un solveur (310) pour déterminer des valeurs pour une pluralité de caractéristiques de ressources (318) associées à des ressources (304) du dispositif électronique (200) sur la base des exigences de ressources (316) reçues et des informations de dépendance (314) définissant des exigences de dépendance hiérarchique entre des valeurs de caractéristiques de ressources définies ; et
une interface de ressources (308) pour fournir les valeurs de caractéristiques de ressources (318) déterminées à des ressources (304) associées respectives du dispositif électronique (200) ;
dans lequel chaque exigence de dépendance hiérarchique entre des valeurs de caractéristiques de ressources est exprimée en tant qu'énoncé entre une valeur de caractéristique de ressource cible pour une de la pluralité de caractéristiques de ressources et une ou plusieurs valeurs de caractéristiques de ressources dépendantes pour une ou plusieurs autres caractéristiques de ressources de la pluralité de caractéristiques de ressources, les une ou plusieurs valeurs de caractéristiques de ressources dépendantes requises pour fournir la valeur de caractéristique de ressource cible.

9. Dispositif électronique selon la revendication 8, dans lequel une ou plusieurs des ressources (304) du dispositif comprennent :
un composant autogéré qui reçoit les une ou plusieurs valeurs de caractéristiques de ressources et détermine une ou plusieurs caractéristiques opérationnelles (320) à appliquer au composant autogéré sur la base des valeurs de caractéristiques de ressources ; et/ou
un composant géré de manière externe qui peut appliquer les une ou plusieurs valeurs de caractéristiques de ressources à une ou plusieurs caractéristiques opérationnelles (320) du composant géré de manière externe.

10. Dispositif électronique selon la revendication 8 ou 9, dans lequel le solveur (310) détermine les valeurs de caractéristiques de ressources en déterminant les valeurs de caractéristiques de ressources qui respectent les exigences de ressources (316) reçues et fournissent une consommation d'énergie la plus basse des ressources (304) du dispositif électronique (200).

11. Dispositif électronique selon l'une quelconque des revendications 8-10, comprenant en outre :
des informations de ressources (312) définissant pour chacune d'une pluralité de ressources (304) du dispositif électronique (200) une pluralité de caractéristiques de ressources et des valeurs admissibles respectives ; et
les informations de dépendance (314) définissant des exigences de dépendance entre des valeurs de caractéristiques de ressources,
dans lequel chaque exigence de dépendance spécifie facultativement une ou plusieurs valeurs de caractéristiques de ressources dépendantes requises afin de fournir une valeur de caractéristique de ressource cible de l'exigence de dépendance.

12. Dispositif électronique selon l'une quelconque des revendications 8-11, dans lequel les caractéristiques de ressources définies comportent une ou plusieurs parmi :
des caractéristiques de ressources d'application pour définir des valeurs de caractéristiques d'une application qui peut être exécutée sur le dispositif électronique (200) ;
des caractéristiques de ressources fonctionnelles pour définir des valeurs de caractéristiques de fonctionnalité fournies par le dispositif électronique (200) ; et
des caractéristiques de ressources de dispositif pour définir des valeurs de caractéristiques de composants matériels du dispositif électronique (200),
dans lequel les informations de dépendance (314) comprennent une ou plusieurs parmi :
une exigence de dépendance entre une valeur de caractéristique de ressource d'application ou une plage de valeurs et une valeur de caractéristique de ressource de dispositif ou une plage de valeurs ;
une exigence de dépendance entre une valeur de caractéristique de ressource d'application ou une plage de valeurs et une valeur de caractéristique de ressource fonctionnelle ou une plage de valeurs ; et
une exigence de dépendance entre une valeur de caractéristique de ressource fonctionnelle ou une plage de valeurs et une valeur de caractéristique de ressource de dispositif ou une plage de valeurs.

13. Dispositif électronique selon l'une quelconque des revendications 8-12, dans lequel :
les exigences de ressources (316) reçues sont associées à un indicateur d'autorité respective ; et
le solveur (310) détermine qu'un conflit existe entre des valeurs de caractéristiques de ressources déterminées, et résout le conflit en utilisant des informations d'autorité (402) spécifiant une autorité relative entre une pluralité d'indicateurs d'autorité, y compris l'indicateur d'autorité respective associé à chaque exigence de ressource reçue.

14. Dispositif électronique selon l'une quelconque des revendications 8-13, dans lequel :
l'interface (306) pour recevoir des exigences de ressources est en outre pour recevoir une exigence de ressource révisée à partir d'un ou plusieurs des demandeurs de ressources qui change les exigences de ressources reçues ;
le solveur (310) détermine en outre des valeurs mises à jour pour des caractéristiques de ressources à partir des exigences de ressources révisées et notifie les un ou plusieurs des demandeurs de ressources (302) d'au moins une des valeurs de caractéristiques de ressources mises à jour ; et
l'interface de ressources fournit les valeurs mises à jour de caractéristiques de ressources (318) aux ressources (304) associées ;
dans lequel le gestionnaire de politiques (300) enregistre facultativement les un ou plusieurs demandeurs de ressources (302) pour la notification d'un changement vers une ou plusieurs valeurs de caractéristiques de ressources.

15. Dispositif selon l'une quelconque des revendications 8-14, dans lequel les demandeurs de ressources (302) comprennent des composants logiciels s'exécutant sur le dispositif électronique (200), et une ou plusieurs des ressources (304) comprennent des composants matériels du dispositif électronique (200), dans lequel les valeurs de caractéristiques de ressources sont fournies à des composants matériels en utilisant un pilote de dispositif associé.
